# EUROPÄISCHE PATENTSCHRIFT

(11) **EP 0 475 240 B1**
(45) Veröffentlichungstag und Bekanntmachung des Hinweises auf die Patenterteilung: **29.11.1995**
(21) Anmeldenummer: 91114813.8
(22) Anmeldetag: 03.09.1991
(51) Int. Cl.: B60T 13/26, B60T 17/06

(54) **Druckluftanlage, insbesondere Teil einer Druckluftbremsanlage eines Fahrzeuges**
Compressed-air system, especially a part of a compressed-air brake system of a vehicle
Installation à air comprimé notamment partie d'une installation de freinage à air comprimé d'un véhicule

(30) Priorität: 12.09.1990 DE 4028934
(43) Veröffentlichungstag der Anmeldung: 18.03.1992
(73) Patentinhaber: Iveco Magirus Aktiengesellschaft, D-89017 Ulm (DE)
(72) Erfinder: Hartauer, Siegbert, W-7919 Bellenberg (DE); Rickert, Udo, W-7910 Neu-Ulm (DE); Giurca, Octavian, W-7908 Niederstotzingen (DE)
(74) Vertreter: TER MEER STEINMEISTER & PARTNER GbR

(56) Entgegenhaltungen:
- EP-A- 0 008 678
- DE-A- 3 109 200
- FR-A- 2 271 089
- US-A- 4 057 298

## Beschreibung

Die Erfindung betrifft eine Druckluftanlage, insbesondere Teil einer Druckluftbremsanlage eines Fahrzeugs, mit einer Druckluftquelle, einem Mehrkreis-Schutzventil und einem nachgeordneten Druckluftbehälter.

Die FR-A 2 271 089 offenbart eine Druckluftanlage, die insbesondere Teil einer Druckluftbremsanlage eines Fahrzeugs ist, und eine Druckluftquelle, ein Mehrfach-Schutzventil und einen dem Ventil nachgeordneten Druckluftbehälter umfaßt. Das Mehrfach-Schutzventil ist unter anderen über eine pneumatische Leitung mit einem Abzweigstück verbunden, das die Verbindung zu Nebenverbrauchern herstellt.

Eine Druckluftanlage der vorgenannten Art ist im übrigen aus DE-PS 28 37 806 bekannt. Diese weist für eine rasche Befüllung der Bremsleitung mehrere Druckluftbehälter und zusätzlich eine Schnellfüllvorrichtung mit einem weiteren Hochdruckspeicher auf.

Bisherige Anordnungen von Druckluftbehältern liegen üblicherweise zwischen den Achsen im Rahmen eines Fahrzeugs an einer hinteren stelle. Die Versorgung diverser pneumatischer Nebenverbraucher erfolgt über einzelne T-Stutzen. Gegebenenfalls kann vor dem Druckluftbehälter ein Druckminderer vorgelagert sein.

Die Luftverteilung über einzelne T-Stutzen bzw. Verzweigungsstücke bedingt eine große Anzahl von Verschraubungsteilen mit vielen Dichtstellen. Aufgrund der vielen Dichtstellen sind entsprechend viele Leckagestellen möglich. Je nach Anzahl der verschiedenen pneumatischen Nebenverbraucher ergibt sich ein mehr oder weniger großer Montageaufwand sowie eine schwierige Leitungsverlegung bei nur begrenzt zur Verfügung stehendem Einbauraum. Eine Vereinheitlichung der einzelnen Bauelemente sowie Modulbauweise ist nur bedingt möglich. Bei einer Anordnung des Druckluftbehälters im hinteren Fahrzeugbereich zwischen den Achsen ergeben sich grundsätzlich Probleme bei der Unterbringung des Behälters. Innerhalb einer einzigen Fahrzeugbaureihe sind naturgemäß unterschiedliche Ausführungsvarianten von Druckluftbehältern erforderlich; entsprechend aufwendig ist die Montage.

Aufgabe der Erfindung ist die Schaffung einer Druckluftanlage der eingangs genannten Art, die mit Hilfe einfacher und weniger Bauteile sowie geringem Montageaufwand in einem bzw. am Fahrzeug wirkungsvoll für diverse pneumatische Nebenverbraucher betrieben werden kann.

Gelöst wird die der Erfindung zugrundeliegende Aufgabe durch die im kennzeichnenden Teil des Anspruchs 1 angegebenen Mittel.

Wesen der Erfindung ist die Ausbildung eines einzigen Verteilerstücks mit mehreren pneumatischen Anschlüssen zu pneumatischen Nebenverbrauchern in Nachordnung des ohnehin in der Druckluft(brems)anlage des Fahrzeugs vorhandenen Mehrkreis-Schutzventils in einer pneumatischen Leitung, in welcher zweckmäßigerweise ein Abzweigstück angeordnet ist, das vorzugsweise über einen einzigen pneumatischen Leitungszweig mit dem Druckluftbehälter der Druckluftanlage verbunden ist. In der pneumatischen Leitung kann zwischen Abzweigstück und Verteilerstück ein Druckminderventil angeordnet sein.

Die Anordnung ist vorzugsweise so getroffen, daß der Druckluftbehälter vor der Achse des Fahrzeugs angeordnet ist, gleichwohl aber die einzelnen pneumatischen Nebenverbraucher mit einfachem baulichen Aufwand versorgt werden können.

Das Verteilerstück weist zweckmäßigerweise Schnellverbindungsanschlüsse zu den pneumatischen Nebenverbrauchern auf.

Das Mehrkreis-Schutzventil ist vorzugsweise ein Vier-Kreis-Schutzventil.

Dadurch, daß eine Anzahl von pneumatischen Nebenverbrauchern über ein einziges Verteilerstück, gegebenenfalls mit Schnellverbindungsanschlüssen, erfolgt, wobei das Verteilerstück für eine Vielzahl von Fahrzeugvarianten zentral am Rahmen angeordnet ist, ist eine einfache und schnelle Montage möglich. Es ergeben sich eine geringe Anzahl an Dichtstellen und demzufolge an möglichen Leckagestellen. Im Vergleich zum eingangs genannten Stand der Technik ergibt sich eine Verringerung der Verschraubungsteile.

Durch die Anordnung des Druckluftbehälters vor der Fahrzeugvorderachse ergibt sich eine bessere Raumausnützung. Insbesondere kann für eine Vielzahl von Fahrzeugvarianten der Druckluftbehälter an gleicher Stelle im Fahrzeug plaziert werden, deren Lage vom Radstand unabhängig ist. Ist der Druckluftbehälter lediglich mit einem einzigen pneumatischen Leitungszweig mit dem restlichen Versorgungsdruckluftkreis verbunden, wobei der einzige pneumatische Leitungszweig sowohl zum Befüllen, als auch zum Nachfüllen und einem Entleeren des Druckluftbehälters dient, ergibt sich naturgemäß eine einfache Leitungsverlegung bei wenigen Leitungs- und Montageteilen.

Ist in zweckmäßiger Weiterbildung der Erfindung ein Druckminderventil nach dem Druckluftbehälter vorgesehen, wird der Druckluftbehälter mit ungemindertem Druck der Bremsanlage beaufschlagt und mithin ein höheres Energieniveau in den Druckluftbehälter eingespeichert, so daß der Druckluftbehälter als sogenannter Hochdruckluftbehälter ausgebildet ist. Entsprechend groß ist der Energievorrat für die einzelnen pneumatischen Nebenverbraucher.

Durch die Erfindung werden mithin mehrere pneumatische Nebenverbraucher mit Hilfe einfacher Mittel wirkungsvoll versorgt, wobei die Nebenverbraucher an einem von der Druckluftanlage bzw. Druckluftbremsanlage unabhängigen Druckluftkreis angeschlossen sind. Gleichwohl werden bei vorhandenem Druckminderventil die pneumatischen Nebenverbraucher mit von der Bremsanlage bereitgestellten geminderten Luftdruck versorgt.

Die Erfindung wird nachfolgend anhand eines Ausführungsbeispiels unter Bezugnahme auf die beigefügte Zeichnung näher beschrieben; es zeigen:
- Fig. 1: eine schematische Anordnung eines Teils der Druckluftanlage im Bereich der Versorgung der einzelnen pneumatischen Nebenverbraucher, und
- Fig. 2: eine Anordnung eines Druckluftbehälters im Bereich vor der Vorderachse eines Nutzfahrzeuges.

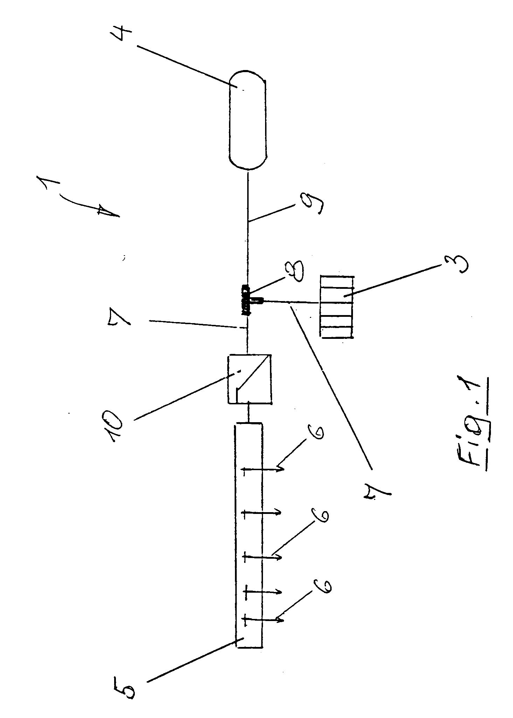

Gemäß Fig. 1 sind von einer Druckluft(brems)anlage (1) eines Fahrzeuges nur jene für das Verständnis der Erfindung notwendigen Teile dargestellt. Es handelt sich dabei um ein Mehrkreis-Schutzventil (3), welches (in nicht veranschaulichter Weise) an eine Druckluftquelle und einen Druckregler einer Druckluft(brems)anlage eines Nutzfahrzeuges angeschlossen ist.

Das Mehrkreis-Schutzventil (3), welches in Form eines Vier-Kreis-Schutzventils ausgebildet ist, steht über eine pneumatische Leitung (7) mit einem einstückigen Verteilerstück (5) in Verbindung, welches eine Mehrzahl pneumatischer Schnellverbindungsanschlüsse zu pneumatischen Nebenverbrauchern (6) aufweist.

In der pneumatischen Leitung (7) befindet sich hinter dem Mehrkreis-Schutzventil (3) ein Abzweigstück (8), welches über einen einzigen pneumatischen Leitungszweig (9) mit dem Druckluftbehälter (4) der Druckluftbremsanlage (1) verbunden ist. Zwischen Abzweigstück (8) und Verteilerstück (5) ist in der pneumatischen Leitung (7) ein Druckminderventil (10) angeordnet.

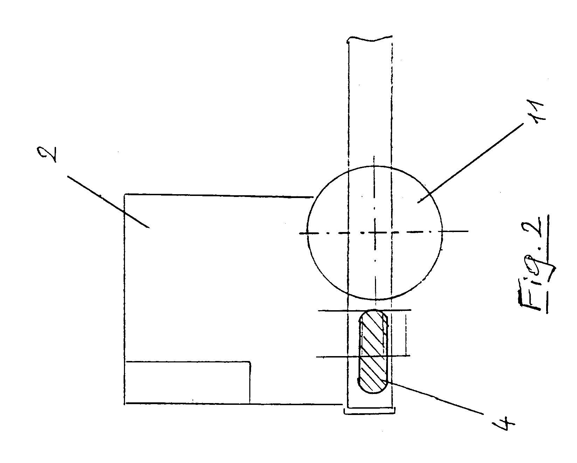

Der Druckluftbehälter (4) ist gemäß Fig. 2 bevorzugt im Bereich vor der Vorderachse (11) des Fahrzeugs (2) angeordnet, während das einzige Verteilerstück (5) zentral am Fahrzeugrahmen befestigt ist, um diverse pneumatische Nebenverbraucher bei geringen Leitungswegen erreichen zu können.

Im Betrieb der Druckluft(brems)anlage (1) wird durch die (nicht veranschaulichte) Druckluftquelle bzw. einen Luftverdichter der Druckluftbremsanlage der Druckluftbehälter (4) mit ungemindertem Druck beaufschlagt. Der hohe pneumatische Energievorrat des Druckluftbehälters (4) versorgt einzelne zugeschaltete pneumatische Nebenverbraucher (6) aufgrund des Druckminderventils (10) mit vermindertem Druck.

## Patentansprüche

1. Druckluftanlage (1), insbesondere Teil einer Druckluftbremsanlage eines Fahrzeugs (2), mit einer Druckluftquelle, einem Mehrkreis-Schutzventil (3) und einem nachgeordneten Druckluftbehälter (4), dadurch **gekennzeichnet**, daß das Mehrkreis-Schutzventil (3) über ein Abzweigstück (8) mit dem Druckluftbehälter (4) der Druckluftanlage einerseits und über ein Druckminderventil (10) mit einem Verteilerstück (5) andererseits verbunden ist, das eine Mehrzahl pneumatischer Anschlüsse zur pneumatischen Versorgung von Nebenverbrauchern aufweist.

2. Druckluftanlage nach Anspruch 1, dadurch **gekennzeichnet**, daß das Verteilerstück (5) Schnellverbindungsanschlüsse zu den Nebenverbrauchern (6) aufweist.

## Claims

1. A compressed-air installation (1), in particular part of a compressed-air braking installation of a vehicle (2), having a compressed-air supply, a multicircuit protector valve (3) and a compressed-air reservoir (4) arranged downstream thereof, characterised in that the multicircuit protector valve (3) is connected, on the one hand, via a branch junction piece (8) with the compressed-air reservoir (4) of the compressed-air installation and, on the other hand, via a pressure-relief valve (10) with a manifold (5) which has a plurality of pneumatic couplings for the pneumatic supply of secondary consumers.

2. A compressed air installation according to Claim 1, characterised in that the manifold (5) has rapid-fastening couplings to the secondary consumers (6).

## Revendications

1. Installation d'air comprimé (1) notamment partie d'une installation de frein à air comprimé d'un véhicule (2), comprenant une source d'air comprimé, un distributeur de protection à circuits multiples (3) et en aval, un réservoir d'air comprimé (4), caractérisée en ce que le distributeur de protection à circuits multiples (3) est relié d'une part par une pièce de dérivation (8) au réservoir d'air comprimé (4) de l'installation d'air comprimé et d'autre part par une soupape de réduction de pression (10) à une pièce distributrice (5) qui comporte plusieurs raccords pneumatiques pour l'alimentation pneumatique d'utilisateurs auxiliaires.

2. Installation d'air comprimé selon la revendication 1, caractérisée en ce que la pièce distributrice (5) comporte des raccords de liaison rapides pour les utilisateurs auxiliaires (6).
